# DEMANDE DE BREVET EUROPEEN

(11) **EP 3 758 386 A1**
(43) Date de publication de la demande: **30.12.2020**
(21) Numéro de dépôt: 20174168.3
(22) Date de dépôt: 12.05.2020
(51) Int. Cl.: H04N 21/431

(54) **PROCÉDÉS D'ENRICHISSEMENT D'UN CONTENU MULTIMÉDIA ET DE RESTITUTION D'UN CONTENU MULTIMÉDIA ENRICHI, DISPOSITIFS ET PROGRAMMES D'ORDINATEURS CORRESPONDANTS**

(30) Priorité: 27.06.2019 FR 1907010
(71) Demandeur: ORANGE, 75015 Paris (FR)
(72) Inventeur: FLOURY, Cédric, 92326 CHATILLON (FR); CATTEAU, Aurore, 92326 CHATILLON (FR)
(74) Mandataire: Vidon Brevets & Stratégie

(57) **Abrégé**

La présente technique concerne un procédé d'enrichissement d'au moins un contenu multimédia source pour sa restitution, sur un dispositif de restitution, dans une zone de restitution présentant un rapport largeur/hauteur différent du rapport largeur/hauteur dudit contenu multimédia source.

Selon la présente technique, le procédé comprend :
- l'identification, à partir dudit contenu multimédia source, d'au moins un contenu d'enrichissement destiné à être restitué dans une région de ladite zone de restitution distincte d'une région de restitution dudit contenu multimédia source ;
- l'enrichissement dudit contenu multimédia source, tenant compte dudit au moins un contenu d'enrichissement et délivrant au moins un contenu multimédia enrichi comprenant au moins une donnée d'enrichissement représentative d'une restitution dudit contenu d'enrichissement dans une région de ladite zone de restitution distincte d'une région de restitution dudit contenu multimédia source..

## Description

### Domaine technique

Le domaine de la présente technique est celui de l'enrichissement de contenus. Plus précisément, la technique proposée concerne une technique d'enrichissement de contenus pour leur restitution dans une zone de restitution présentant un rapport largeur/hauteur différent de celui du contenu à restituer.

### Art antérieur

Les échanges de données personnelles (telles que des photos, des vidéos, des messages...) via des terminaux tels que les smartphones ou les tablettes se multiplient à l'heure actuelle. Pour ce faire, il existe une multitude d'applications de messagerie (SMS, « WhatsApp », « Facebook Messenger » etc...) à partir desquelles il est possible d'envoyer du contenu texte ou multimédia (photos/vidéos) à un ou des destinataires.

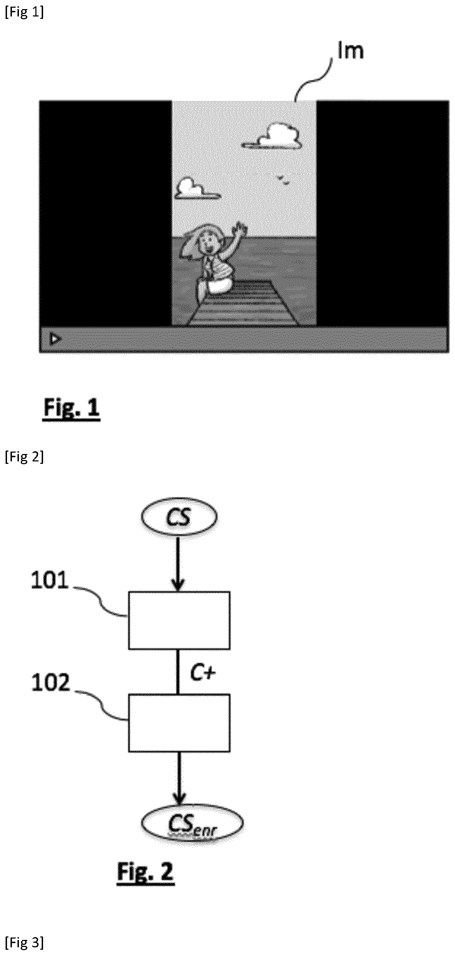

Concernant les photos/vidéos, une problématique fréquemment rencontrée est liée à la différence de format, et plus particulièrement de rapport ou ratio largeur/hauteur, entre le contenu multimédia source et la zone de restitution (par exemple l'écran du terminal du destinataire). C'est par exemple le cas lorsque la prise de vue (photo ou vidéo) est réalisée en mode paysage et que l'écran de restitution est orienté en mode portrait, ou vice versa. Si on considère notamment le mode portrait, dès lors que l'on souhaite visualiser une vidéo ou une photo en mode paysage, les techniques actuelles affichent des bandes noires, de chaque côté du contenu multimédia source Im, pour compléter l'affichage, comme illustré en Fig 1.

Un inconvénient de cette technique d'affichage de bandes noires pour « remplir » l'écran de restitution, lorsque le contenu à restituer ne présente pas le même format que la zone de restitution, réside dans le fait que la zone de restitution n'est pas totalement exploitée, engendrant une expérience utilisateur dégradée voire négative.

De plus, les bandes noires, qui peuvent représenter une zone de l'écran relativement importante par rapport au contenu multimédia lui-même, peuvent donc être perçues comme gênantes pour l'utilisateur par rapport au contenu multimédia qu'il visualise.

Il existe donc un besoin d'une technique de restitution d'un contenu multimédia source, dans une zone de restitution ne présentant pas le même rapport largeur/hauteur que le contenu, qui soit plus ergonomique et qui offre une meilleure expérience utilisateur de visualisation de contenu multimédia, tout en présentant une efficacité identique ou accrue en termes de stockage, de transmission et de traitement de contenus multimédia par rapport aux solutions existantes.

### Exposé de l'invention

La présente technique répond à ce besoin en proposant un procédé d'enrichissement d'au moins un contenu multimédia source pour sa restitution, sur un dispositif de restitution, dans une zone de restitution présentant un rapport largeur/hauteur différent du rapport largeur/hauteur du contenu multimédia source.

Selon la technique proposée, le procédé d'enrichissement comprend les étapes suivantes :
- une étape d'identification, à partir du contenu multimédia source, d'au moins un contenu d'enrichissement destiné à être restitué dans une région de la zone de restitution distincte d'une région de restitution du contenu multimédia source ;
- une étape d'enrichissement du contenu multimédia source, tenant compte dudit au moins un contenu d'enrichissement identifié et délivrant au moins un contenu multimédia enrichi comprenant au moins une donnée d'enrichissement représentative d'une restitution du contenu d'enrichissement dans une région de la zone de restitution distincte d'une région de restitution du contenu multimédia source.

Ainsi, la présente technique repose sur une approche tout à fait nouvelle et inventive de la restitution d'un contenu dans une zone de restitution de rapport largeur/hauteur différent de celui du contenu (par exemple une restitution en mode paysage d'un contenu multimédia ayant été capturé en mode portrait, ou vice versa) par enrichissement du contenu multimédia d'origine de manière à rendre sa restitution optimale en termes d'expérience utilisateur.

En effet, dans le cas le plus classique d'un contenu source capturé en mode portrait et restitué sur un écran orienté en mode paysage, le contenu source n'occupe pas la totalité de la zone de restitution sur l'écran et les techniques de restitution connues répondent à cette problématique en affichant des bandes noires de chaque côté du contenu multimédia source. L'expérience utilisateur n'est alors pas optimale car le fait de ne pas bénéficier de la totalité de la zone de restitution peut entrainer une certaine frustration.

La présente technique permet donc une restitution constituée d'une part d'un contenu multimédia source et d'autre part d'un contenu d'enrichissement, identifié à partir du contenu source lui-même, lorsque le contenu source présente un rapport largeur/hauteur différent de celui de la zone de restitution. Ainsi, dans le cas d'un contenu capturé en mode portrait, la présente technique permet d'obtenir une restitution cohérente et harmonieuse en mode paysage, par exemple en remplaçant les bandes noires de l'art antérieur par du contenu relatif au contenu source, flouté par exemple.

Par exemple, le contenu d'enrichissement correspond à une image ou une partie d'une image du contenu capturé (contenu vidéo ou photo par exemple), considérée comme pertinente car étant représentative du contenu capturé (par exemple avec des personnages récurrents, ou une couleur dominante).

Le contenu d'enrichissement peut également correspondre à un contenu non extrait du contenu capturé mais choisi dans une base de données de contenus (une bibliothèque d'images ou de vidéos par exemple) comme étant représentatif du contenu capturé (une image type fonds d'écran représentant un paysage ressemblant aux paysages apparaissant fréquemment dans le contenu capturé).

Selon la technique proposée, le contenu d'enrichissement peut être identifié par exemple au moment du stockage du contenu capturé (directement sur le dispositif de capture, ou sur un autre dispositif/serveur de stockage) ou bien au moment de la restitution (sur un dispositif de restitution).

Par contenu multimédia, on entend tout type de contenu multimédia numérique, tels que des contenus vidéo ou audio-visuels, comme par exemple des vidéos ou des films.

Selon un aspect particulier, le procédé d'enrichissement comprend en outre une étape de traitement dudit au moins un contenu d'enrichissement identifié, délivrant ladite au moins une donnée d'enrichissement, et l'étape d'enrichissement du contenu multimédia source comprend une sous-étape d'insertion de ladite au moins une donnée d'enrichissement dans le contenu multimédia source pour délivrer ledit au moins un contenu multimédia enrichi.

Ainsi, selon un aspect particulier, le contenu d'enrichissement identifié à partir du contenu multimédia source est traité de manière à obtenir au moins une donnée d'enrichissement destinée à être ajoutée au contenu multimédia pour fournir un contenu multimédia enrichi.

De telles données d'enrichissement correspondent par exemple à une ou plusieurs métadonnées ajoutées au contenu multimédia source, permettant ainsi de transmettre des informations relatives au contenu additionnel d'enrichissement sans transmettre directement ce contenu additionnel d'enrichissement. Ces métadonnées sont ensuite lues/décodées au moment de la restitution, de manière à pouvoir afficher/restituer le contenu additionnel en même temps que le contenu capturé. Cela permet de ne pas augmenter la taille ou le poids du contenu transmis (donc la bande passante nécessaire à sa transmission dans un réseau, ou encore la taille de la zone mémoire nécessaire pour le stockage) tout en offrant une restitution optimisée à l'utilisateur.

Par exemple, ces données d'enrichissement correspondent à un numéro d'image dans une vidéo, à des coordonnées d'une zone dans une image, à un traitement (par exemple un degré de flou, un changement de couleur...) à appliquer au contenu d'enrichissement ...

Selon une caractéristique particulière, l'étape d'identification d'au moins un contenu d'enrichissement comprend une étape d'analyse du contenu multimédia source selon au moins un critère prédéterminé.

Ainsi, le contenu source est analysé, selon des critères prédéterminés, pour pouvoir identifier le contenu d'enrichissement. Par exemple, les critères prédéterminés correspondent à la recherche de personnages récurrents, de couleur dominante et récurrente, de zones uniformes ... soit pour utiliser les images présentant ces personnages ou cette couleur dominante comme contenu additionnel, soit pour sélectionner, dans une bibliothèque de contenus, un contenu additionnel pertinent.

De cette manière, la restitution du contenu source et du contenu d'enrichissement est harmonieuse et permet une meilleure expérience utilisateur car le contenu d'enrichissement est lié au contenu source.

Par exemple, ledit au moins un contenu d'enrichissement identifié correspond à une portion du contenu multimédia source.

Ainsi, selon un aspect particulier, le contenu d'enrichissement, destiné à être restitué en plus du contenu source, dans les zones de restitution non utilisées pour le contenu source, correspond à une portion extraite du contenu source, par exemple une zone d'une image identifiée par des coordonnées spatiales en plus du numéro de l'image, ou une image entière dans le cas d'un contenu vidéo identifiée par un numéro d'image (un ou plusieurs personnages, une couleur, un arrière-plan ...).

Le lien entre le contenu d'enrichissement et le contenu source est direct dans ce cas, car le contenu d'enrichissement est extrait du contenu source. L'utilisateur peut alors bénéficier d'une restitution cohérente sur toute la zone de restitution.

Selon un aspect particulier, l'étape d'identification d'au moins un contenu d'enrichissement comprend une étape de sélection d'au moins un contenu d'enrichissement distinct du contenu multimédia source.

Ainsi, le contenu d'enrichissement, destiné à être restitué en plus du contenu source, dans les zones de restitution non utilisées pour le contenu source, correspond à un contenu distinct du contenu source et sélectionné par exemple dans une base de données ou une bibliothèque de vidéos, d'images, d'animations, ou encore de textes. La sélection de ce contenu d'enrichissement tient cependant compte du contenu source, par exemple en se basant sur une ou plusieurs couleurs dominantes dans le contenu source pour choisir une image présentant les mêmes couleurs, ou en se basant sur un arrière-plan (la neige, la mer, la plage, la forêt, une prairie ...) pour choisir une image représentative d'un type de lieu, d'ambiance, ou encore un texte personnalisé ou contextualisé ..).

Dans ce cas, le lien entre le contenu d'enrichissement et le contenu source est également présent, car le contenu d'enrichissement est sélectionné selon des critères relatifs au contenu source. L'utilisateur peut donc également bénéficier d'une restitution cohérente sur toute la zone de restitution.

Selon une caractéristique particulière, l'étape d'identification d'au moins un contenu d'enrichissement comprend une sous-étape d'oculométrie d'un utilisateur au cours d'une restitution du contenu multimédia source.

Ainsi, l'identification du contenu d'enrichissement à restituer dans les zones non occupées par le contenu source est effectuée en cours de restitution et mise en œuvre en tenant compte d'une technique de suivi du regard de l'utilisateur ou « Eye tracking » en anglais. De cette manière, les zones de l'image ou de la vidéo formant le contenu source sur lesquelles s'attarde le regard de l'utilisateur sont identifiées comme pouvant servir de contenu d'enrichissement à restituer à côté du contenu source.

Dans ce cas, le contenu d'enrichissement est mis à jour en temps réel, au cours de la restitution, donc par le dispositif de restitution, et permet une restitution cohérente et évolutive sur toute la zone de restitution, améliorant encore l'expérience utilisateur. La fréquence de mise à jour du contenu d'enrichissement peut être prédéterminée en tenant compte de critères à la fois relatifs à la mise en œuvre de la technique d'oculométrie mais également relatifs à l'ergonomie pour l'utilisateur. On peut en effet supposer qu'une mise à jour trop fréquente du contenu d'enrichissement dégrade l'expérience utilisateur au lieu de l'améliorer.

Selon une caractéristique particulière, ladite au moins une donnée d'enrichissement comprend au moins une coordonnée spatiale représentative du contenu d'enrichissement.

Ainsi, dans ce cas, la donnée d'enrichissement comprend au moins une coordonnée spatiale permettant de retrouver le contenu d'enrichissement, comme par exemple une coordonnée du centre du contenu d'enrichissement, sachant que d'autres caractéristiques comme la taille du contenu, le rapport largeur/hauteur de restitution, sont prédéterminées par exemple... Limiter la donnée d'enrichissement à une seule coordonnée permet donc à la fois de pouvoir repérer, par exemple dans le contenu source, le centre du contenu d'enrichissement identifié tout en adaptant son format à celui de la zone de restitution par exemple.

Selon un aspect particulier, le procédé d'enrichissement comprend, préalablement à l'étape d'identification, une étape de détection dans le contenu multimédia source d'au moins une donnée représentative du rapport largeur/hauteur du contenu multimédia source.

Ainsi, selon cet aspect particulier, la technique proposée détecte dans quel format le contenu source a été capturé, afin notamment de paramétrer la taille, et/ou le rapport largeur/hauteur, du contenu d'enrichissement pour une restitution optimale en plus du contenu source.

Selon une caractéristique particulière, l'étape d'enrichissement comprend une étape d'ajout d'au moins un indicateur de présence de ladite au moins une donnée d'enrichissement, ledit indicateur étant destiné à signaler la disponibilité du contenu d'enrichissement pendant une restitution du contenu multimédia source, sur un dispositif de restitution, dans une zone de restitution du dispositif de restitution présentant un rapport largeur/hauteur similaire au rapport largeur/hauteur du contenu multimédia source.

La technique proposée concerne également un procédé de restitution d'au moins un contenu multimédia enrichi dans une zone de restitution d'un dispositif de restitution, ledit au moins un contenu multimédia enrichi comprenant au moins un contenu multimédia source et au moins une donnée d'enrichissement représentative d'une restitution d'un contenu d'enrichissement dans une région de la zone de restitution distincte d'une région de restitution du contenu multimédia source.

Selon la technique proposée, le procédé de restitution comprend les étapes suivantes :
- une étape de détection d'une différence entre un rapport largeur/hauteur de la zone de restitution et un rapport largeur/hauteur du contenu multimédia source ;
- si une différence est détectée :
   - une étape de traitement de ladite au moins une donnée d'enrichissement, délivrant le contenu d'enrichissement ;
   - une étape de restitution du contenu multimédia source et du contenu d'enrichissement respectivement dans deux régions distinctes de la zone de restitution.

Ainsi, la présente technique permet de restituer de manière optimale un contenu multimédia enrichi en détectant une différence de rapport largeur/hauteur entre la zone de restitution et le contenu, et en exploitant des données d'enrichissement présentes dans le contenu enrichi. L'exploitation de ces données d'enrichissement délivre le contenu d'enrichissement identifié lors du procédé d'enrichissement et destiné à être restitué à côté du contenu source.

Selon un aspect particulier, si aucune différence n'est détectée, le procédé de restitution comprend les étapes suivantes :
- une étape de détection de ladite au moins une donnée d'enrichissement ;
- une étape de restitution d'un indicateur de présence de contenu d'enrichissement.

Ainsi, selon un aspect particulier, la présence d'un contenu d'enrichissement en vue d'une restitution dans une zone de rapport largeur/hauteur différent de celui du contenu source est signalée à l'utilisateur, lorsque le contenu source est d'abord restitué dans une zone de rapport largeur/hauteur adapté. Par exemple, lorsqu'une photo ou une vidéo est capturée en mode portrait et restituée en mode portrait, un indicateur visuel est affiché, en plus de la photo ou de la vidéo, pour que l'utilisateur sache que s'il oriente en mode paysage son dispositif de restitution, il bénéficiera d'un contenu additionnel au contenu source pour lui offrir une meilleure expérience. Si l'utilisateur change l'orientation de son dispositif de restitution, le contenu source est alors restitué avec le contenu d'enrichissement restitué dans les zones complémentaires sur l'écran.

La présente technique concerne également un dispositif d'enrichissement comprenant au moins une unité de traitement configurée pour enrichir au moins un contenu multimédia source pour sa restitution, sur un dispositif de restitution, dans une zone de restitution présentant un rapport largeur/hauteur différent du rapport largeur/hauteur dudit contenu multimédia source, l'unité de traitement étant également configurée pour :
- identifier, à partir du contenu multimédia source, au moins un contenu d'enrichissement destiné à être restitué dans une région de la zone de restitution distincte d'une région de restitution du contenu multimédia source ;
- enrichir le contenu multimédia source, en tenant compte dudit au moins un contenu d'enrichissement identifié, et délivrer au moins un contenu multimédia enrichi comprenant au moins une donnée d'enrichissement représentative d'une restitution du contenu d'enrichissement dans une région de la zone de restitution distincte d'une région de restitution du contenu multimédia source.

En particulier, le dispositif d'enrichissement est apte à mettre en œuvre les étapes du procédé d'enrichissement tel que décrit précédemment. Par exemple, un tel dispositif d'enrichissement correspond à un terminal de communication mobile apte à capturer, et/ou stocker et/ou restituer un contenu multimédia, comme un smartphone, une tablette, un ordinateur ..., ou un serveur de stockage de contenus multimédias.

La technique proposée concerne également un produit programme d'ordinateur comprenant des instructions de code de programme pour la mise en œuvre d'un procédé tel que décrit précédemment ou l'exécution des fonctionnalités d'un dispositif tel que décrit précédemment, lorsqu'il est exécuté par un processeur.

Le dispositif d'enrichissement et le programme d'ordinateur correspondants précités présentent au moins les mêmes avantages que ceux conférés par le procédé d'enrichissement selon la présente technique.

La présente technique vise également un dispositif de restitution comprenant au moins une unité de traitement configurée pour restituer au moins un contenu multimédia enrichi dans une zone de restitution d'un dispositif de restitution, ledit au moins un contenu multimédia enrichi comprenant au moins un contenu multimédia source et au moins une donnée d'enrichissement représentative d'une restitution d'un contenu d'enrichissement dans une région de la zone de restitution distincte d'une région de restitution du contenu multimédia source, et l'unité de traitement étant également configurée pour :
- détecter une différence entre un rapport largeur/hauteur de la zone de restitution et un rapport largeur/hauteur du contenu multimédia source ;
- si une différence est détectée :
   - traiter ladite au moins une donnée d'enrichissement et délivrer le contenu d'enrichissement ;
   - restituer le contenu multimédia source et le contenu d'enrichissement respectivement dans deux régions distinctes de la zone de restitution.

En particulier, le dispositif de restitution est apte à mettre en œuvre les étapes du procédé de restitution tel que décrit précédemment. Par exemple, un tel dispositif d'enrichissement correspond à un terminal de communication mobile apte à restituer un contenu multimédia, comme un smartphone, une tablette, un ordinateur ...

La présente technique concerne également un produit programme d'ordinateur comprenant des instructions de code de programme pour la mise en œuvre d'un procédé ou l'exécution des fonctionnalités d'un dispositif tels que décrits précédemment, lorsqu'il est exécuté par un processeur.

Le dispositif de restitution et le programme d'ordinateur correspondants précités présentent au moins les mêmes avantages que ceux conférés par le procédé de restitution selon la présente technique.

La présente technique vise également un support d'enregistrement lisible par un ordinateur sur lequel est enregistré un programme d'ordinateur comprenant des instructions de code de programme pour l'exécution des étapes du procédé d'enrichissement selon la technique proposée tel que décrit ci-dessus.

La présente technique vise également un support d'enregistrement lisible par un ordinateur sur lequel est enregistré un programme d'ordinateur comprenant des instructions de code de programme pour l'exécution des étapes du procédé de restitution selon la technique proposée tel que décrit ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon la présente technique peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé d'enrichissement et/ou du procédé de restitution précité.

### Présentation des figures

D'autres buts, caractéristiques et avantages de la technique proposée apparaîtront plus clairement à la lecture de la description suivante, donnée à titre de simple exemple illustratif, et non limitatif, en relation avec les figures, parmi lesquelles :
[Fig 1] présente un exemple d'affichage en mode paysage d'un contenu multimédia capturé en mode portrait, selon une technique de l'art antérieur ;
[Fig 2] illustre sous forme d'organigramme les différentes étapes du procédé d'enrichissement d'un contenu multimédia source selon un mode de réalisation de la technique proposée ;
[Fig 3] illustre un exemple d'identification d'un contenu d'enrichissement selon un mode de réalisation de la technique proposée ;
[Fig 4] illustre sous forme d'organigramme les différentes étapes du procédé de restitution d'un contenu multimédia enrichi selon un mode de réalisation de la technique proposée ;
[Fig 5a] illustre un exemple de restitution d'un contenu enrichi selon une première variante de réalisation de la technique proposée ;
[Fig 5b] illustre un exemple de restitution d'un contenu enrichi selon une deuxième variante de réalisation de la technique proposée ;
[Fig 5c] illustre un exemple de restitution d'un contenu enrichi selon une troisième variante de réalisation de la technique proposée ;
[Fig 6] illustre un exemple de restitution d'un contenu enrichi selon un autre mode de réalisation de la technique proposée ;
[Fig 7] présente la structure matérielle d'un dispositif d'enrichissement d'un contenu multimédia source selon un mode de réalisation de la technique proposée ;
[Fig 8] présente la structure matérielle d'un dispositif de restitution d'un contenu multimédia enrichi selon un mode de réalisation de la technique proposée.

### Description détaillée de modes de réalisation de l'invention

Le principe général de la technique proposée repose sur l'identification, à partir d'un contenu multimédia source, d'un contenu d'enrichissement à restituer en plus/à côté du contenu multimédia source, lorsque la zone de restitution (par exemple un écran de terminal de communication) présente un rapport largeur/hauteur différent de celui du contenu multimédia source.

De plus, le contenu d'enrichissement identifié, qui correspond par exemple à un extrait du contenu multimédia source, n'est pas directement ajouté à ce contenu multimédia source pour obtenir un contenu enrichi, de manière à ne pas augmenter la taille/le poids (en octets) du contenu enrichi (pour son stockage ou sa transmission), mais il est traité afin d'obtenir une donnée d'enrichissement qui, elle, sera ajoutée au contenu multimédia source pour obtenir un contenu multimédia enrichi.

Selon un autre aspect, la présente technique concerne donc la restitution d'un tel contenu enrichi, par détection, lecture et traitement de la donnée d'enrichissement afin de retrouver le contenu d'enrichissement à restituer en plus/à côté du contenu multimédia source, lorsqu'une différence est détectée entre un rapport largeur/hauteur de la zone de restitution et un rapport largeur/hauteur du contenu multimédia source.

Selon un aspect secondaire, la technique proposée prévoit également d'afficher un indicateur de présence du contenu enrichi (par exemple sous la forme d'une icône), lorsqu'au contraire aucune différence n'est détectée entre un rapport largeur/hauteur de la zone de restitution et un rapport largeur/hauteur du contenu multimédia source. De cette manière, au moment de la restitution, l'utilisateur sait que son expérience sera améliorée, par rapport aux techniques antérieures, s'il change l'orientation de la zone de restitution et qu'alors cette dernière ne présente plus le même rapport largeur/hauteur que celui du contenu multimédia source.

On présente désormais plus en détail, en relation avec la Fig 2, les étapes d'enrichissement d'un contenu multimédia source CS pour sa restitution, sur un dispositif de restitution, dans une zone de restitution présentant un rapport largeur/hauteur différent de celui du contenu multimédia source. Par exemple, le cas se présente lorsqu'une vidéo, ou une photo, est prise au format portrait, et que le dispositif de restitution est orienté au format paysage. Comme déjà discuté en relation avec la Fig 1 de l'art antérieur, cela se traduit par l'ajout de bandes noires de chaque côté de la vidéo, ou de la photo, rendant ainsi l'expérience utilisateur dégradée.

Selon un mode de réalisation de la présente technique, le procédé d'enrichissement de contenu comprend ainsi une première étape d'identification 101 d'au moins un contenu d'enrichissement C+ destiné à être restitué dans une région de la zone de restitution distincte d'une région de restitution du contenu multimédia source CS, par exemple en remplacement des bandes noires de l'art antérieur. Selon la présente technique, l'identification 101 d'au moins un contenu d'enrichissement C+ est mise en œuvre à partir du contenu multimédia source CS, permettant ainsi d'obtenir un contenu d'enrichissement C+ en relation/adéquation avec le contenu multimédia source CS, rendant la restitution globale cohérente et harmonieuse pour l'utilisateur. Dans les exemples décrits ci-après, le contenu d'enrichissement constitue donc un arrière-plan du contenu source, avec un rendu flouté et contrasté par rapport au contenu source. L'impression visuelle rendant meilleure l'expérience utilisateur s'explique par le fait que le contenu d'enrichissement est restitué de part et d'autre du contenu source dans son format source (i.e. son format de prise de vue), toute la zone de restitution étant occupée par du contenu autre qu'un fond noir, avec, en premier plan, le contenu source.

Une mise en œuvre différente, non détaillée et non illustrée, pourrait consister en la restitution du contenu d'enrichissement de chaque côté du contenu source, ou bien en la restitution de deux contenus d'enrichissement distincts de chaque côté du contenu source, l'idée étant, comme déjà expliqué, de remplacer des bandes noires par un contenu présentant du sens/du lien par rapport au contenu source.

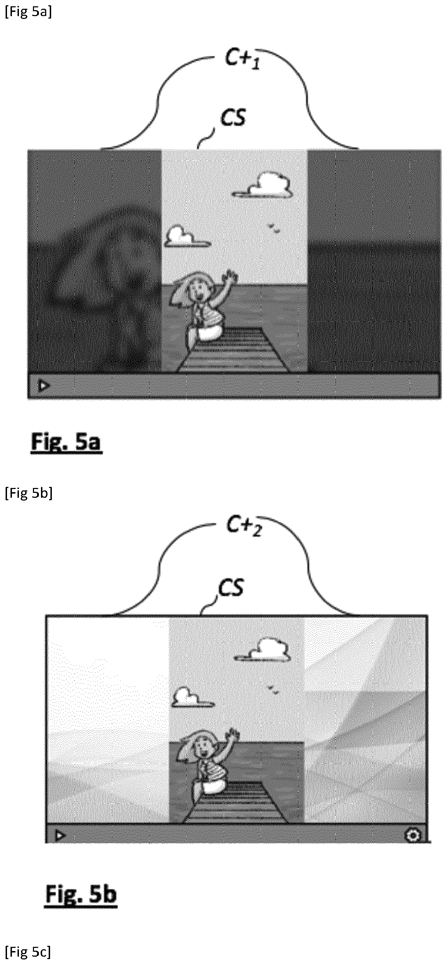

Par exemple, le contenu d'enrichissement *C+₁* correspond, selon une première variante de mise en œuvre, à une portion ou un extrait du contenu multimédia source *CS,* considéré comme représentatif du contenu multimédia source *CS.* Pour ce faire, l'un au moins des critères suivants est appliqué afin d'identifier le contenu d'enrichissement *C+₁* : présence de personnages récurrents, d'une ou plusieurs couleurs dominantes ou récurrentes, d'un ou plusieurs arrière-plans ou paysages dominants ou récurrents ... Cette première variante est illustrée par exemple en Fig 5a, illustrant la restitution d'un contenu multimédia source *CS* et, de chaque côté, une portion de ce contenu multimédia source *CS* représentant plus particulièrement le personnage central du contenu source. Par ailleurs, un filtre a été appliqué à la portion identifiée pour la rendre floue. Cette première variante est décrite plus en détail ci-après, en relation avec la deuxième étape du procédé d'enrichissement. Selon cette première variante, si le contenu source correspond à une photo prise dans un paysage de forêt, avec une prédominance de vert, alors le contenu d'enrichissement peut correspondre à une portion de l'image représentant des arbres. Selon une deuxième variante de mise en œuvre, le contenu d'enrichissement *C+₂* correspond à un contenu multimédia importé d'une base de données, ou d'une bibliothèque d'images, de vidéos, d'animations ou encore de textes, considéré là-encore comme représentatif du contenu multimédia source *CS.* Pour ce faire, l'un au moins des critères de similitude suivants est appliqué afin d'identifier le contenu d'enrichissement *C+₂* : couleur(s) dominante(s) ou récurrente(s) du contenu à sélectionner dans la base de données similaire(s) à une des couleurs du contenu source, arrière-plan ou paysage dominant ou récurrent similaire à un arrière-plan ou paysage du contenu source ... Cette deuxième variante est illustrée par exemple en Fig 5b, illustrant la restitution d'un contenu multimédia source *CS* et, de chaque côté, un arrière-plan présentant des formes géométriques dans des tons proches de la partie supérieure du contenu source (c'est-à-dire un arrière-plan de tons bleus similaires au ciel).

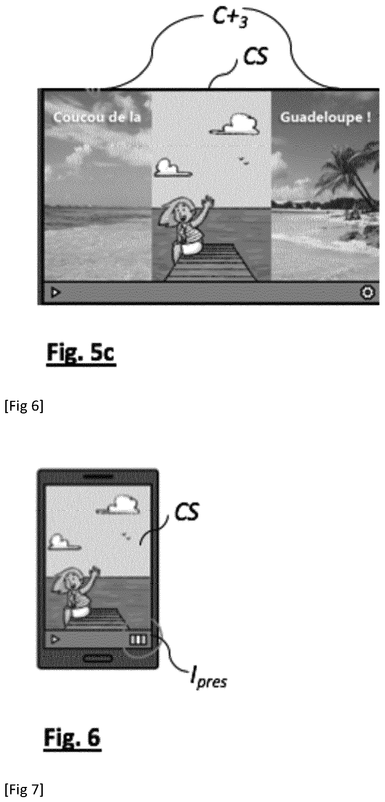

Selon une troisième variante illustrée en Fig 5c, le contenu d'enrichissement *C+₃* correspond à un arrière-plan présentant un paysage de plage (cohérent avec le contenu source représentant une fillette sur un ponton s'avançant dans la mer, avec en fond un ciel bleu), ainsi qu'un message personnalisé. Un tel contenu d'enrichissement *C+₃* contextualisé ou personnalisé peut nécessiter une action de l'utilisateur au moment de la capture du contenu source, de façon à définir par exemple le texte à ajouter au contenu d'enrichissement.

Le procédé d'enrichissement de contenu comprend ensuite une étape d'enrichissement 102 du contenu multimédia source *CS,* tenant compte du contenu d'enrichissement préalablement identifié et délivrant au moins un contenu multimédia enrichi *CSₑₙᵣ.* Selon la présente technique, le contenu multimédia enrichi *CSₑₙᵣ* comprend au moins une donnée d'enrichissement *D+* représentative d'une restitution dudit contenu d'enrichissement *C+* dans une région de la zone de restitution distincte d'une région de restitution du contenu multimédia source *CS.*

Ainsi, en tenant compte du contenu d'enrichissement préalablement identifié, un contenu enrichi est obtenu, comprenant notamment le contenu source et au moins une donnée d'enrichissement, par exemple sous la forme de métadonnées, laquelle permet de retrouver le contenu d'enrichissement, pour sa restitution, sans avoir à l'ajouter en tant que tel au contenu source. De cette manière, le contenu enrichi ne présente pas une taille (en octets) très différente du contenu source, optimisant ainsi les ressources pour son stockage et/ou pour sa transmission.

Par exemple, la donnée d'enrichissement est issue d'un traitement du contenu d'enrichissement afin d'en extraire une ou plusieurs informations qui permettent de le restituer, comme par exemple :
- un numéro d'image dans une vidéo source, ainsi qu'une ou plusieurs coordonnées spatiales permettant d'identifier une portion dans cette image ;
- une ou plusieurs coordonnées spatiales permettant d'identifier une portion dans une image source ;
- un identifiant (URL ou pointeur) d'une image/vidéo/animation/texte dans une base de données ou bibliothèque ;
- un ou plusieurs identifiants de paramètres à appliquer, au moment de la restitution, au contenu d'enrichissement, comme par exemple un niveau de flou pour obtenir un effet contrasté du contenu d'enrichissement par rapport au contenu source.

Par ailleurs, selon une caractéristique particulière de la technique proposée, la ou les données d'enrichissement correspondent à des métadonnées transmises en même temps que le contenu source, dans un contenu enrichi *CSₑₙᵣ.* Ces métadonnées sont ensuite lues, au moment de la restitution du contenu enrichi, afin de pouvoir restituer le contenu source et le contenu d'enrichissement si le format de la zone de restitution est différent de celui du contenu source.

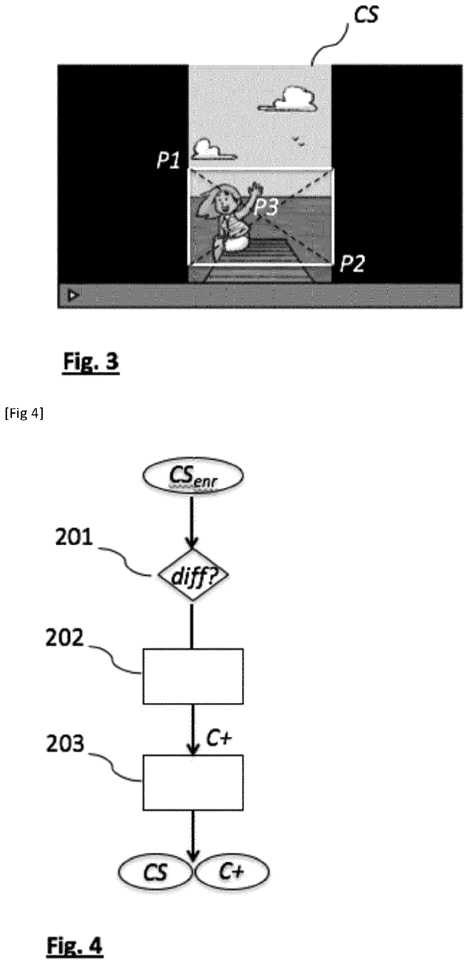

Si l'on considère la première variante de réalisation décrite ci-dessus, dans laquelle le contenu d'enrichissement correspond à une portion du contenu source (vidéo), les données d'enrichissement doivent permettre de restituer cette portion du contenu source, donc comprennent par exemple :
- un ou plusieurs numéros d'image(s), selon que l'on choisisse d'extraire le contenu d'enrichissement à plusieurs reprises lors de la restitution (i.e. le contenu d'enrichissement change au fur et à mesure de la restitution du contenu source, afin de s'y adapter et donc d'offrir une restitution cohérente et harmonieuse durant toute la restitution) ou seulement à partir d'une image de référence identifiée ;
- une ou plusieurs coordonnées spatiales, obtenues par exemple selon le processus décrit ci-après, en relation avec la Fig 3 ;
- une information de paramétrage d'une transformation à appliquer au contenu d'enrichissement, comme par exemple un degré de rendu flou.

La Fig 3 illustre donc le résultat d'un processus d'obtention/calcul de coordonnées spatiales permettant d'identifier le contenu d'enrichissement à restituer. Tout d'abord, le contenu source CS (image ou vidéo) est analysé, par exemple par lecture des métadonnées déjà présentes (voir ci-après) dans ce contenu source, de manière à connaître notamment le format de prise de vue, par exemple portrait ou paysage. La connaissance de ce format permettra notamment de paramétrer la taille de la portion de contenu qui formera le contenu d'enrichissement. Ensuite, une analyse de l'ensemble des images de la vidéo source est mise en œuvre, par exemple via un algorithme d'intelligence artificielle pour identifier une portion représentative (ici autour de l'enfant), en tenant compte des critères déjà décrits ci-dessus (personnage(s) récurrent(s), couleur(s) dominante(s) ...). A partir de cette portion représentative, les coordonnées de P1 et P2 sont calculées, puis la coordonnée spatiale de référence P3 est calculée à partir de P1 et P2. C'est cette coordonnée qui sera avantageusement stockée dans les métadonnées du contenu enrichi. En effet, l'avantage de stocker la seule coordonnée P3 et non les coordonnées P1 et P2 réside notamment dans l'adaptation, au moment de la restitution, du format du contenu d'enrichissement. Ainsi, lors de la lecture de la vidéo sur un dispositif de restitution, la connaissance de la coordonnée P3 permet de recalculer P1 et P2 en fonction de la résolution/du format du dispositif de restitution qui joue la vidéo. Ces étapes permettent donc de déterminer un rectangle dans l'image selon le rapport largeur/hauteur paysage, si par exemple la vidéo a été enregistrée au format portrait, l'objectif de la présente technique étant d'adapter la restitution d'un contenu source dans le cas où la zone de restitution présente un ratio différent de celui du contenu source. Comme illustré en Fig 3, le rectangle identifié présente un format paysage, alors que le contenu source a été pris en format portrait, car le rectangle correspondant au contenu d'enrichissement est destiné à n'être restitué, en arrière-plan du contenu source, que lorsqu'un utilisateur souhaitera visualiser le contenu source en mode paysage.

Une fois obtenue(s) la ou les coordonnées spatiales P1, P2 et P3, la coordonnée P3 est insérée, sous forme de métadonnée, dans le contenu source pour délivrer un contenu enrichi.

Plusieurs formats textuels connus peuvent être exploités pour décrire des métadonnées, comme par exemple le XML (pour « Extensible Markup Language » en anglais) ou encore XMP (pour « Extensible Metadata Platform » en anglais) ou encore le JSON (pour « JavaScript Object Notation » en anglais). Un nouveau format peut également être défini pour décrire la ou les données d'enrichissement destinées à être insérées au contenu source pour obtenir un contenu enrichi.

Par exemple, si l'on se réfère à XMP, il existe un champ « *Orientation »* qui correspond à une chaine de caractères et qui peut avoir comme valeur « *Horizontal »* ou « *Vertical* », permettant de connaître le format de prise de vue (portrait ou paysage).

Selon la technique proposée, plusieurs champs pourraient être ajoutés comme ceux décrits dans le tableau ci-après :

**[Tableau 1]**

| Nom du champ (ou « Tag ») | Valeurs possibles | Description |
|---|---|---|
| EnrichVideoMode | OUI/NON (ou « YES/NO » en anglais) | Champ permettant de signaler que du contenu enrichi est disponible |
| AutoFrame | OUI/NON (ou « YES/NO » en anglais) | Champ indiquant que toutes les images du contenu source sont à exploiter (OUI/YES) ou seulement une image est à exploiter (NON/NO) |
| MonoFrame | Référence de l'image | Champ permettant de connaître l'image de référence si le champ « AutoFrame » est à NON/NO |
| EnrichFrameCenter | Coordonnée X,Y de P3 | Point P3 calculé par le procédé d'enrichissement |
| EnrichFrameOperation | Flou (« blur » en anglais) | Exemple de paramétrage de rendu flou |

Ces champs, transmis dans le contenu enrichi en plus du contenu source, permettent, au moment de la restitution, d'afficher le contenu d'enrichissement identifié, lorsque le format de la zone de restitution est différent de celui du contenu source.

Comme déjà indiqué ci-dessus, il est possible de ne transmettre, via les métadonnées, qu'une seule coordonnée spatiale P3 permettant de calculer les autres coordonnées P1 et P2 pour retrouver le contenu d'enrichissement à restituer.

Selon le mode de réalisation décrit-ci-dessus, et ses variantes, le procédé d'enrichissement d'un contenu multimédia source peut être mis en œuvre aussi bien par un dispositif de prise de vue (par exemple un smartphone, une tablette ...) que par un dispositif de stockage de contenus (par exemple un serveur de contenus) ou encore par un dispositif de restitution (par exemple un smartphone, une tablette, un ordinateur ...).

Selon un deuxième mode de réalisation, dans lequel le procédé d'enrichissement d'un contenu multimédia source est mis en œuvre par le dispositif de restitution lui-même, une technique d'oculométrie est utilisée afin d'identifier le contenu d'enrichissement. Ainsi, le contenu d'enrichissement est mis à jour régulièrement, au fur et à mesure de la restitution du contenu enrichi, en fonction des résultats du suivi des mouvements oculaires de l'utilisateur. Pour ce faire, des critères prédéterminés peuvent être appliqués au contenu source, comme par exemple :
- une durée minimum de fixation d'une partie de l'écran par l'utilisateur, afin d'identifier une portion du contenu source représentatif d'un intérêt de l'utilisateur ;
- une fréquence de mise à jour du contenu d'enrichissement, afin de conserver une expérience utilisateur cohérente et harmonieuse, en ne changeant pas trop fréquemment le contenu d'enrichissement, pour ne pas perturber l'utilisateur, tout en adaptant le contenu d'enrichissement aux évolutions du contenu source au cours de sa restitution. Par exemple, si la vidéo source fait apparaître des paysages puis des personnages, le contenu d'enrichissement pourrait dans un premier temps être représentatif des paysages (une couleur ou un arrière-plan) et dans un deuxième temps être représentatif d'un ou plusieurs personnages récurrents.

Selon ce deuxième mode de réalisation, la ou les données d'enrichissement D+ correspondent par exemple à une coordonnée spatiale représentative du centre d'une zone d'intérêt de l'utilisateur repérée dans le contenu source grâce à une technique d'oculométrie/de suivi du regard de l'utilisateur.

On décrit maintenant, en relation avec les Fig 4, 5a à 5c et 6, le procédé de restitution d'un contenu multimédia enrichi, selon un mode de réalisation de la présente technique.

Les principales étapes de ce procédé de restitution sont illustrées en Fig 4 et sont mises en œuvre par un dispositif de restitution. Par ailleurs, le contenu multimédia enrichi *CSₑₙᵣ* selon l'un quelconque des modes de réalisation du procédé d'enrichissement décrits ci-dessus, comprend au moins un contenu multimédia source *CS* et au moins une donnée d'enrichissement *D₊* représentative d'une restitution d'un contenu d'enrichissement *C+* dans une région de la zone de restitution (du dispositif de restitution) distincte d'une région de restitution du contenu multimédia source *CS.*

Dans un premier temps, une étape de détection 201 d'une différence entre un rapport largeur/hauteur de la zone de restitution et un rapport largeur/hauteur du contenu multimédia source *CS* est mise en œuvre, de manière à déterminer si le contenu d'enrichissement doit être restitué, en plus du contenu source.

Ainsi, si une différence est détectée, une étape de traitement 202 de la donnée d'enrichissement *D₊* est mise en œuvre, par exemple pour lire les métadonnées du contenu enrichi et ainsi délivrer le contenu d'enrichissement *C+* identifié par le procédé d'enrichissement. Cette étape de traitement 202 permet donc de reconstruire/retrouver le contenu d'enrichissement *C+* et d'obtenir les éventuels paramètres associés, comme par exemple un rendu flou à appliquer ... Comme déjà discuté ci-dessus, la donnée d'enrichissement *D₊* peut par exemple correspondre à un numéro d'image dans une vidéo et une coordonnée spatiale permettant de reconstruire un rectangle, dans le format de la zone de restitution (par exemple au format paysage), ainsi qu'un degré de rendu flou.

Une étape de restitution 203 du contenu multimédia source *CS* et du contenu d'enrichissement *C+*, respectivement dans deux régions distinctes de la zone de restitution, est ensuite mise en œuvre. Par exemple, le contenu d'enrichissement est restitué de chaque côté du contenu source, restitué dans son format portrait, au centre de la zone de restitution.

Des exemples de restitution d'un contenu enrichi sont illustrés notamment en Fig 5a à 5c, selon les trois variantes décrites ci-dessus pour le procédé d'enrichissement, dans lesquelles, respectivement :
- le contenu d'enrichissement *C+₁* correspond à une portion du contenu source ;
- le contenu d'enrichissement *C+₂* correspond à un fond géométrique choisi dans une bibliothèque d'images ;
- le contenu d'enrichissement *C+₁* correspond à une image choisie dans une bibliothèque d'images et un texte contextuel (choisi ou non par l'utilisateur originaire du contenu source).

Selon une caractéristique particulière du procédé de restitution, si aucune différence de rapport largeur/hauteur n'est détectée ente la zone de restitution et le contenu source *CS,* c'est-à-dire lorsque le contenu source est restitué dans son format de prise de vue (en mode portrait par exemple), la technique proposée prévoit l'affichage d'un indicateur de présence d'un contenu d'enrichissement, à destination de l'utilisateur visualisant le contenu source. De cette manière, cet utilisateur peut, s'il le préfère, changer l'orientation de son dispositif de restitution, sans craindre de dégradation de la restitution.

Pour ce faire, la donnée d'enrichissement *D+* présente dans le contenu enrichi *CSₑₙᵣ* est détectée, lors d'une étape de détection, de façon à s'assurer qu'un contenu d'enrichissement *C+* est bien disponible. Ensuite, un indicateur de présence *Iₚᵣₑₛ* de contenu d'enrichissement est affiché, en plus du contenu source *CS,* sur l'écran du dispositif de restitution, comme illustré en Fig 6.

Par exemple, un des champs de métadonnées décrit dans le tableau ci-dessus (« EnrichVideoMode »), correspondant à une donnée d'enrichissement, peut être détecté afin de s'assurer de la présence qu'un contenu d'enrichissement C+.

L'indicateur de présence *Iₚᵣₑₛ* de contenu d'enrichissement peut également être affiché dès lors qu'une donnée d'enrichissement (peu importe laquelle) est présente dans le contenu enrichi.

Les différents modes de réalisation et variantes décrits ci-dessus permettent donc de fournir un affichage cohérent et harmonieux d'un contenu source lorsqu'il est restitué dans une zone de restitution (d'un dispositif de restitution) présentant un rapport (ou ratio) largeur/hauteur différent de celui du contenu source lui-même. Cela peut être le cas par exemple lorsqu'une photo ou une vidéo est capturée en mode portrait et restituée en mode paysage, et vice versa, et dans tout autre cas de format de restitution spécifique et différent du format de prise de vue.

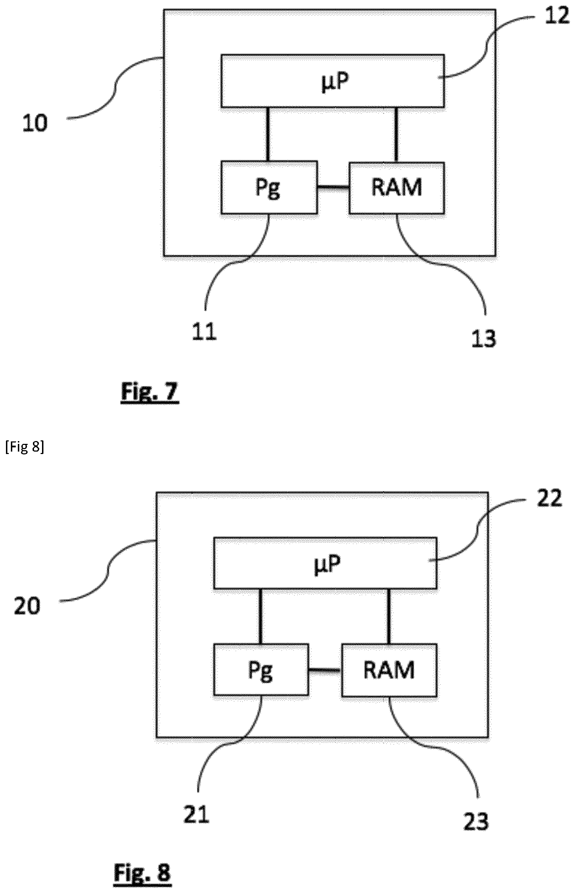

On présente désormais, en relation avec la Fig 7, la structure matérielle d'un dispositif d'enrichissement 10 selon un mode de réalisation de la présente technique.

Le terme dispositif d'enrichissement peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

Plus généralement, un tel dispositif d'enrichissement comprend une mémoire vive 13 (par exemple une mémoire RAM), une unité de traitement 12 équipée par exemple d'un processeur, et pilotée par un programme d'ordinateur 11. A l'initialisation, les instructions de code du programme d'ordinateur sont par exemple chargées dans la mémoire vive 13 avant d'être exécutées par le processeur de l'unité de traitement 12. La mémoire vive 13 contient notamment les critères d'identification de contenu d'enrichissement, les règles de calcul d'au moins une coordonnée spatiale représentative du contenu d'enrichissement, etc. Le processeur de l'unité de traitement 12 met en œuvre les étapes du procédé d'enrichissement, selon les instructions du programme d'ordinateur 11 pour :
- identifier, à partir du contenu multimédia source, au moins un contenu d'enrichissement destiné à être restitué dans une région de la zone de restitution distincte d'une région de restitution du contenu multimédia source ;
- enrichir le contenu multimédia source, en tenant compte dudit au moins un contenu d'enrichissement, et délivrer au moins un contenu multimédia enrichi comprenant au moins une donnée d'enrichissement représentative d'une restitution du contenu d'enrichissement dans une région de la zone de restitution distincte d'une région de restitution du contenu multimédia source.

La Fig 7 illustre seulement une manière particulière, parmi plusieurs possibles, de réaliser le dispositif d'enrichissement, afin qu'il effectue les étapes du procédé détaillé ci-dessus, en relation avec les Fig 1 à Fig 6 (dans l'un quelconque des différents modes de réalisation, ou dans une combinaison de ces modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif d'enrichissement est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

On présente finalement, en relation avec la Fig 8, la structure matérielle d'un dispositif de restitution 20 selon un mode de réalisation de la technique proposée.

Le terme dispositif de restitution peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

Plus généralement, un tel dispositif de restitution comprend une mémoire vive 23 (par exemple une mémoire RAM), une unité de traitement 22 équipée par exemple d'un processeur, et pilotée par un programme d'ordinateur 21. A l'initialisation, les instructions de code du programme d'ordinateur sont par exemple chargées dans la mémoire vive 23 avant d'être exécutées par le processeur de l'unité de traitement 22. Le processeur de l'unité de traitement 22 met en œuvre les étapes du procédé de restitution, selon les instructions du programme d'ordinateur 21 pour :
- détecter une différence entre un rapport largeur/hauteur de la zone de restitution et un rapport largeur/hauteur du contenu multimédia source ;
- si une différence est détectée :
   - traiter ladite au moins une donnée d'enrichissement et délivrer le contenu d'enrichissement ;
   - restituer le contenu multimédia source et le contenu d'enrichissement respectivement dans deux régions distinctes de la zone de restitution.

La Fig 8 illustre seulement une manière particulière, parmi plusieurs possibles, de réaliser le dispositif de restitution, afin qu'il effectue les étapes du procédé détaillé ci-dessus, en relation avec les Fig 1 à Fig 6 (dans l'un quelconque des différents modes de réalisation, ou dans une combinaison de ces modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif de restitution est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

1. Procédé d'enrichissement d'au moins un contenu multimédia source (*CS*) pour sa restitution, sur un dispositif de restitution, dans une zone de restitution présentant un rapport largeur/hauteur différent du rapport largeur/hauteur dudit contenu multimédia source, **caractérisé en ce qu'**il comprend les étapes suivantes :
- une étape d'identification (101), à partir dudit contenu multimédia source (*CS*), d'au moins un contenu d'enrichissement (C+) destiné à être restitué dans une région de ladite zone de restitution distincte d'une région de restitution dudit contenu multimédia source ;
- une étape d'enrichissement (102) dudit contenu multimédia source (*CS*), tenant compte dudit au moins un contenu d'enrichissement identifié et délivrant au moins un contenu multimédia enrichi (*CSₑₙᵣ*) comprenant au moins une donnée d'enrichissement (*D+*) représentative d'une restitution dudit contenu d'enrichissement (*C+*) dans une région de ladite zone de restitution distincte d'une région de restitution dudit contenu multimédia source (*CS*).

2. Procédé d'enrichissement selon la revendication 1, **caractérisé en ce qu'**il comprend en outre une étape de traitement dudit au moins un contenu d'enrichissement identifié, délivrant ladite au moins une donnée d'enrichissement,
et **en ce que** ladite étape d'enrichissement dudit contenu multimédia source comprend une sous-étape d'insertion de ladite au moins une donnée d'enrichissement dans ledit contenu multimédia source pour délivrer ledit au moins un contenu multimédia enrichi.

3. Procédé d'enrichissement selon l'une quelconque des revendications 1 et 2, **caractérisé en ce que** ladite étape d'identification d'au moins un contenu d'enrichissement comprend une étape d'analyse dudit contenu multimédia source selon au moins un critère prédéterminé.

4. Procédé d'enrichissement selon l'une quelconque des revendications 1 à 3, **caractérisé en ce que** ledit au moins un contenu d'enrichissement identifié correspond à une portion dudit contenu multimédia source.

5. Procédé d'enrichissement selon l'une quelconque des revendications 1 à 3, **caractérisé en ce que** ladite étape d'identification d'au moins un contenu d'enrichissement comprend une étape de sélection d'au moins un contenu d'enrichissement distinct dudit contenu multimédia source.

6. Procédé d'enrichissement selon l'une quelconque des revendications 1 à 5, **caractérisé en ce que** ladite étape d'identification d'au moins un contenu d'enrichissement comprend une sous-étape d'oculométrie d'un utilisateur au cours d'une restitution dudit contenu multimédia source.

7. Procédé d'enrichissement selon l'une quelconque des revendications 1 à 6, **caractérisé en ce que** ladite au moins une donnée d'enrichissement comprend au moins une coordonnée spatiale représentative dudit contenu d'enrichissement.

8. Procédé d'enrichissement selon l'une quelconque des revendications 1 à 7, **caractérisé en ce qu'**il comprend, préalablement à ladite étape d'identification, une étape de détection dans ledit contenu multimédia source d'au moins une donnée représentative du rapport largeur/hauteur dudit contenu multimédia source.

9. Procédé de restitution d'au moins un contenu multimédia enrichi (*CSₑₙᵣ*) dans une zone de restitution d'un dispositif de restitution,
**caractérisé en ce que** ledit au moins un contenu multimédia enrichi (*CSₑₙᵣ*) comprend au moins un contenu multimédia source (*CS*) et au moins une donnée d'enrichissement (*D₊*) représentative d'une restitution d'un contenu d'enrichissement (*C+*) dans une région de ladite zone de restitution distincte d'une région de restitution dudit contenu multimédia source (*CS*),
et **en ce que** ledit procédé de restitution comprend les étapes suivantes :
- une étape de détection (201) d'une différence entre un rapport largeur/hauteur de ladite zone de restitution et un rapport largeur/hauteur dudit contenu multimédia source (*CS*) ;
- si une différence est détectée :
- une étape de traitement (202) de ladite au moins une donnée d'enrichissement (*D₊*), délivrant ledit contenu d'enrichissement (*C+*) ;
- une étape de restitution (203) dudit contenu multimédia source (*CS*) et dudit contenu d'enrichissement (*C+*) respectivement dans deux régions distinctes de ladite zone de restitution.

10. Procédé de restitution selon la revendication 9,
**caractérisé en ce que**, si aucune différence n'est détectée, il comprend les étapes suivantes :
- une étape de détection de ladite au moins une donnée d'enrichissement ;
- une étape de restitution d'un indicateur de présence (*Iₚᵣₑₛ*) de contenu d'enrichissement.

11. Dispositif d'enrichissement (10) comprenant au moins une unité de traitement configurée pour enrichir au moins un contenu multimédia source pour sa restitution, sur un dispositif de restitution, dans une zone de restitution présentant un rapport largeur/hauteur différent du rapport largeur/hauteur dudit contenu multimédia source, **caractérisé en ce que** ladite au moins une unité de traitement est également configurée pour :
- identifier, à partir dudit contenu multimédia source, au moins un contenu d'enrichissement destiné à être restitué dans une région de ladite zone de restitution distincte d'une région de restitution dudit contenu multimédia source ;
- enrichir ledit contenu multimédia source, en tenant compte dudit au moins un contenu d'enrichissement identifié, et délivrer au moins un contenu multimédia enrichi comprenant au moins une donnée d'enrichissement représentative d'une restitution dudit contenu d'enrichissement dans une région de ladite zone de restitution distincte d'une région de restitution dudit contenu multimédia source.

12. Dispositif de restitution (20) comprenant au moins une unité de traitement configurée pour restituer au moins un contenu multimédia enrichi dans une zone de restitution d'un dispositif de restitution, **caractérisé en ce que** ledit au moins un contenu multimédia enrichi comprenant au moins un contenu multimédia source et au moins une donnée d'enrichissement représentative d'une restitution d'un contenu d'enrichissement dans une région de ladite zone de restitution distincte d'une région de restitution dudit contenu multimédia source, et ladite au moins une unité de traitement étant également configurée pour :
- détecter une différence entre un rapport largeur/hauteur de ladite zone de restitution et un rapport largeur/hauteur dudit contenu multimédia source ;
- si une différence est détectée :
- traiter ladite au moins une donnée d'enrichissement et délivrer ledit contenu d'enrichissement ;
- restituer ledit contenu multimédia source et ledit contenu d'enrichissement respectivement dans deux régions distinctes de ladite zone de restitution.

13. Produit programme d'ordinateur comprenant des instructions de code de programme pour la mise en œuvre d'un procédé selon l'une quelconque des revendications 1 à 8, lorsqu'il est exécuté par un processeur.

14. Produit programme d'ordinateur comprenant des instructions de code de programme pour la mise en œuvre d'un procédé selon l'une quelconque des revendications 9 et 10, lorsqu'il est exécuté par un processeur.
